# EUROPÄISCHE PATENTSCHRIFT

(11) **EP 2 692 565 B1**
(45) Veröffentlichungstag und Bekanntmachung des Hinweises auf die Patenterteilung: **25.04.2018**
(21) Anmeldenummer: 13179128.7
(22) Anmeldetag: 02.08.2013
(51) Int. Cl.: B60J 7/22

(54) **Windschottvorrichtung für Cabriolet-PKW**
Wind deflector device for cabriolet cars
Dispositif pare-vent pour véhicule automobile cabriolet

(30) Priorität: 02.08.2012 DE 102012107112
(43) Veröffentlichungstag der Anmeldung: 05.02.2014
(73) Patentinhaber: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietmar, 85117 Eitensheim (DE)
(74) Vertreter: Schlief, Thomas P.

(56) Entgegenhaltungen:
- EP-A2- 1 216 870
- EP-A2- 2 143 582
- DE-A1-102006 029 135
- DE-A1-102011 052 140
- DE-C2- 19 616 448
- DE-U1-202007 018 329
- FR-A1- 2 967 615
- US-A1- 2003 085 006

## Beschreibung

Die Erfindung betrifft eine Windschottvorrichtung für ein Personenkraftfahrzeug gemäß dem Oberbegriff des Patentanspruchs 1.

Windschottvorrichtungen mit einem oder zwei Rahmen sind vielfältig bekannt. Aus der DE 10 2004 061 758 A1 ist beispielsweise eine solche Vorrichtung mit zwei Rahmen bekannt, welche Doppelgelenke aufweist, um eine zweifache Faltung zu realisieren. Die DE 10 2007 042 952 A1 ist eine Abwandlung dieser Idee, bei der einer der beiden Rahmen vollständig in den anderen Rahmen eintaucht, so dass sich eine Bauhöhe der gesamten Vorrichtung ergibt, welche dem größten Rahmendurchmesser der beiden Rahmen entspricht.

Bei den bekannten Windschottvorrichtungen faltet sich die Flachmaterialbahn im Bereich der beiden Schwenkscharniere zweier gegeneinander verschwenkbarer Teilrahmen mit einer Knickkante, die sich vom einen zum anderen Schwenkscharnier erstreckt. In Fällen, in denen die Schwenkscharniere aus der Ebene der Flachmaterialbahn herausragen, ist die Flachmaterialbahn ausgeschnitten, so dass sie beim Aufklappen nicht zu sehr gespannt wird und somit ein Reißen verhindert wird. Bei ineinander eintauchenden Rahmen ist ein solcher Ausschnitt in der Flachmaterialbahn des äußeren Rahmens sinnvoll, damit diese im vollständig ausgeklappten Zustand nicht an den Schwenkscharnieren der Teilrahmen des inneren Rahmens über Gebühr gestrafft wird und ggf. einreißt. Allerdings sind diese Ausschnitte optisch wenig ansprechbar, stellen Zugluftlöcher dar und bieten wenig Stabilität gegen sich seitlich ausbreitende Risse, die von diesen Ausschnitten ausgehen. Die gattungsgemäße DE 20 2007 018 329 U1 offenbart andererseits ein Windschott mit zwei Drehgelenken bzw. Schwenkscharnieren, die zwei Teilrahmen des Windschotts miteinander verbinden. Jedes Drehgelenk besteht im Wesentlichen aus einem flexiblen Element aus beispielsweise Nylon oder einem gebogenen Metallstreifen, die jeweils sichtbare Durchbrechungen zur Fixierung an den beiden Teilrahmen aufweisen.

Es ist Aufgabe der vorliegenden Erfindung, eine stabilere und dichtere Faltung einer Windschottvorrichtung mit mindestens einem Rahmen zur Verfügung zu stellen.

Diese Aufgabe wird bei einer Windschottvorrichtung der eingangs genannten Art durch die Merkmale des Anspruchs 1 gelöst.

Die Vorteile der Erfindung sind insbesondere darin zu sehen, dass eine vollflächige Flachmaterialbahn Einsatz finden kann, d.h. es kann entsprechend einer bevorzugten Ausführung auf unschöne, wenig stabile Aussparungen in der Flachmaterialbahn verzichtet werden. Die Flachmaterialbahn hat aufgrund der Mehrfachfaltung in der zusammengeklappten Stellung des Rahmens keinen oder nahezu keinen mechanisch belastenden Kontakt mit beispielsweise Schwenkscharnieren oder anderen Elementen dieses oder eines anderen, zur Windschottvorrichtung gehörenden Rahmens. Die Flachmaterialbahn wird daher auch bei vollflächiger Ausgestaltung mechanisch nicht nennenswert in den besagten Randbereichen nahe dem mindestens einen Schwenkscharnier auf insbesondere Druck beansprucht. Im vollständig ausgeklappten Zustand wölbt sich die Flachmaterialbahn bei einer solchen Ausgestaltung der Windschottvorrichtung über die Schwenkachse und vorzugsweise auch über das mindestens eine Schwenkscharnier oder erstreckt sich alternativ in der Ebene der Schwenkachse.

Vorzugsweise verlaufen die mehreren Knickkanten einer Mehrfachfaltung zumindest abschnittsweise nebeneinander oder sogar parallel. Beispielsweise beginnen die Knickkanten unmittelbar am Rand der Flachmaterialbahn, laufen dann eine Wegstrecke parallel zueinander, um dann zum Beispiel zu einer einzigen Knickkanten zusammen zu laufen. Beim Verschwenken aus der aufgeklappten Stellung bilden sich die Knickkanten vorzugsweise im Wesentlichen alle gleichzeitig.

Die Flachmaterialbahn des ersten Rahmens ist gemäß einer vorteilhaften Ausführungsform nicht unmittelbar im Bereich des eigenen Schwenkscharniers und/oder - bei einer Windschottvorrichtung mit einem ersten und einem zweiten Rahmen (s.u.) - im Bereich des Schwenkscharniers des zweiten Rahmens eingespannt. Der Begriff "nicht unmittelbar" bedeutet hierbei einen kleinen seitlichen Abstand (in Verlaufsrichtung der Rahmenprofile gesehen), beispielweise 1 mm oder mehr, zur Außenkontur eines von der Mehrfachfaltung überwölbten Schwenkscharniers. Dadurch kann sich die Flachmaterialbahn bei aufgefaltetem Einfachrahmen bzw. in der Zwischenposition einer zweirahmigen Windschottvorrichtung (s.u.), im Vergleich zu den ansonsten sich in einer Ebene erstreckenden Flachmaterialabschnitten, im Bereich der Schwenkscharniere hochwölben, ohne dass im Bereich der Schwenkscharniere eine zu große Spannung bzw. Belastung auf das Gewirke der Flachmaterialbahn entstünde. Das Gewirke kann hierbei über seine gesamte Fläche mit gleichem Material und gleicher Struktur ausgebildet sein. Es ist aber auch möglich, dass die Flachmaterialbahn bis an das Schwenkscharnier heranreicht; hier wird dann beim Auffalten des Rahmens die Dehnbarkeit der Flachmaterialbahn ausgenutzt, um sich über das Schwenkscharnier zu wölben.

Mit Vorteil findet die Erfindung Einsatz bei einer Windschottvorrichtung, die zusätzlich einen zweiten Rahmen mit einer Flachmaterialbahn sowie zwei Teilrahmen umfasst, die ihrerseits wiederum mittels mindestens eines Schwenkscharniers, häufig zweier Schwenkscharnieren, gegeneinander um eine Schwenkachse verschwenkbar sind. Der zweite Rahmen ist mit dem ersten Rahmen um eine Klappachse schwenkbar verbunden, so dass die Windschottvorrichtung aus einer mindestens zweifach gefalteten Aufbewahrposition in eine Zwischenposition und weiter in eine Gebrauchsposition zusammenfaltbar ist - und entsprechend in umgekehrter Reihenfolge wieder aufklappbar. In der Zwischenposition, in der die jeweiligen Teilrahmen beider Rahmen aufgeklappt sind, aber der erste und der zweite Rahmen zueinander geklappt sind, erstrecken sich die besagten Randbereiche der im ersten Rahmen eingespannten Flachmaterialbahn erfindungsgemäß über die Schwenkgelenke der beiden Teilrahmen des zweiten Rahmens. Beim Zusammenfalten der Windschottvorrichtung von der Zwischenposition in die Aufbewahrposition beugen sich die besagten Randbereiche der Flachmaterialbahn von diesen Schwenkgelenken weg, wobei sich die besagte erfindungsgemäße Mehrfachfaltung bildet.

Die Erfindung lässt sich besonders vorteilhaft bei einer Windschottvorrichtung einsetzen, bei der in der Aufbewahrposition zumindest ein Bereich des zweiten Rahmens in den ersten Rahmen eintaucht und die Schwenkachsen der jeweiligen Teilrahmen der beiden Rahmen zusammenfallen. Eine solche Windschottvorrichtung ist beispielsweise in der oben genannten DE 10 2007 042 952 A1 beschrieben. Ein teilweises Eintauchen des zweiten Rahmens in den ersten, wobei nicht vollständig eintauchende Profilabschnitte beispielsweise auf einer entlang der Rahmeninnenkante verlaufenden ansteigenden Mulde bzw. Ausnehmung des ersten Rahmens abgelegt werden können (und die Schwenkachsen der jeweiligen Teilrahmen auch hier zusammenfallen), ist ebenfalls möglich.

Vorzugsweise ist bei der vorgenannten Windschottvorrichtung der erste Rahmen als ein Abdeckungsrahmen zum Abdecken des Fahrzeuginnenraums hinter Fahrer- und Beifahrersitz und der zweite Rahmen als ein Windschottrahmen zum Aufstellen im Fahrzeug ausgebildet. Bei dieser Ausgestaltung kann der Windschottrahmen derart in die Zwischenposition geklappt werden, dass er auf bzw. teilweise oder ganz in den Abdeckungsrahmen abgelegt wird bzw. eintaucht. Die Flachmaterialbahn des Abdeckungsrahmens wölbt sich dann mit nur geringem Anpressdruck über das mindestens eine Schwenkscharnier der Teilrahmen des Windschottrahmens. Beim Zusammenklappen aus der Zwischenposition in die Aufbewahrposition faltet sich die Flachmaterialbahn des Abdeckungsrahmens dann von diesem mindestens einen Schwenkscharnier des zweiten Rahmens weg. Die umgekehrte Ausbildung ist ebenfalls möglich, wobei der Abdeckungsrahmen der innere und der Windschottrahmen der äußere Rahmen ist.

Vorteilhafterweise ist die Mehrfachfaltung der betreffenden Flachmaterialbahn lediglich im jeweiligen Schwenkscharnierbereich vorhanden, während sie zwischen diesen beiden Scharnieren - mit einem entsprechenden Übergang - nur eine einzige Knickkante aufweist. Die Knickkanten laufen vor dem Übergang in eine einzige Knickkante besonders bevorzugt zumindest abschnittsweise parallel und in Richtung der Schwenkachse des Rahmens. Besonders bevorzugt fluchtet hierbei in Draufsicht die mittlere Knickkante der Mehrfachfaltung (bei einer ungeraden Anzahl an Knickkanten) mit der besagten einzigen Knickkante, die ebenfalls bevorzugt in Richtung des Schwenkachse des Rahmens verläuft.

Vorzugsweise ragt die jeweilige Mehrfachfaltung - in Draufsicht auf den entsprechenden Rahmen in dessen zusammengefaltetem Zustand gesehen - in ihrer Axialrichtung mindestens um wenige Millimeter in Richtung des Rahmeninnenraums über das Scharnierende hinaus, bevor die Mehrfachfaltung in eine Einfachfaltung übergeht. Alternativ oder ggf. gleichbedeutend beträgt die Länge der Mehrfachfaltung mindestens 8 mm in Richtung des Rahmeninnenraums, gerechnet von dem Befestigungsmittel zur Fixierung der Flachmaterialbahn im Rahmen. Die Gesamtlänge der Mehrfachfaltung in ihrer Axialrichtung beträgt vorzugsweise mehr als 8 mm und bevorzugt mehr als 12 mm. Die Länge wird zweckmäßigerweise auf die Scharniere und/oder andere Elemente des oder der Rahmen der Windschottvorrichtung angepasst. Mit den vorgenannten Maßen lassen sich Spannungen auf die Flachmaterialbahn in deren Übergangsbereich von den Schwenkscharnieren zum Rahmeninnenraum hin wirkungsvoll vermeiden.

Die Breite der Mehrfachfaltung mit ihren mehreren Knickkanten beträgt - in Draufsicht gesehen bei aufgeklapptem Rahmen und gemessen als Abstand der beiden äußersten Knickkanten - mindestens 5 mm, vorzugsweise mehr als 10 mm, wobei diese Breite von dem zu beiden Seiten der Mehrfachfaltung endenden Befestigungsmittel zur Fixierung der Flachmaterialbahn des ersten Rahmens definiert ist. Die genannte Breite definiert die Maße der Mehrfachfaltung; eine kurze Breite lässt nur eine kleine bzw. flache Mehrfachfaltungshöhe zu, während eine größere Breite eine größere bzw. höhere Mehrfachfaltung entstehen lässt, die dementsprechend auch größere und höhere Schwenkscharniere überwölben kann.

Eine bevorzugte Mehrfachfaltung weist drei Knickkanten auf (vorzugsweise im Querschnitt ein "W" bildend), wobei eine entsprechend vorher eingebrachte Vorfaltung (Konditionierung) möglich ist, damit sich die Mehrfachfaltung bei wiederholter Klappung in definierter Weise einstellt. Die beiden äußeren der drei Knickkanten befinden sich hierbei unmittelbar im Übergangsbereich der jeweiligen Einspannung in jedem Teilrahmen. Mit anderen Worten knickt die Flachmaterialbahn direkt am Austrittsbereich aus dem Rahmen ab; die Knickkanten weisen hierbei bei zusammengefalteter Windschottvorrichtung von dem Scharnier weg. Die dritte Knickkante befindet sich in der Mitte zwischen den beiden vorgenannten Knickkanten und ist in die entgegengesetzte Richtung gefaltet. Hierdurch ist eine einfache, definierte und doch effiziente Mehrfachfaltung, d.h. eine Faltung mit mehreren Knickkanten, für die Flachmaterialbahn realisiert.

Das mindestens eine besagte Befestigungsmittel für die im ersten Rahmen eingespannte Flachmaterialbahn umfasst bevorzugt mindestens einen Keder gebildet, der in einer Halterung, vorzugsweise einer Nut, des ersten Rahmens eingelegt ist und dort die Flachmaterialbahn randseitig einspannt.

Gemäß einem auch als eigenständig anzusehenden Aspekt der Erfindung für eine Windschottvorrichtung nach dem Oberbegriff des Anspruchs 1 verläuft das Befestigungsmittel für die Flachmaterialbahn des ersten Rahmens zumindest im Bereich der Schwenkscharniere, die in der Nähe der jeweiligen Innenkante des ersten Rahmens angeordnet sind, näher an der Außenkante als an der Innenkante des ersten Rahmens. Somit können vorteilhafterweise die Schwenkscharniere des ersten und - soweit vorhanden - des zweiten Rahmens durch die Flachmaterialbahn des ersten Rahmens verdeckt werden. Auch lässt sich eine Druckverteilung der Schwenkscharniere auf diesen Abschnitt der Flachmaterialbahn über eine größere Fläche erreichen, so dass es zu keinen zu hohen mechanischen Spannungen in der Flachmaterialbahn im Bereich der Scharniere kommt.

Gemäß einer vorteilhaften Ausführungsform verläuft das Befestigungsmittel für die im ersten Rahmen eingespannte Flachmaterialbahn, insbesondere den besagten Keder, in dem ersten Rahmen mit einem variierenden Abstand von der Innenkante des ersten Rahmens. Beispielsweise ist das Befestigungsmittel im Bereich der Schwenkscharniere weiter zur Außenkante des Rahmenprofils versetzt angeordnet als in anderen oder auch sogar allen übrigen Profilabschnitten des ersten Rahmens. Die Flachmaterialbahn kann in diesem Fall bis auf die Randbereiche mit der vorgesehenen Mehrfachfaltung und deren unmittelbare Umgebung nahe der Rahmeninnenkante eingespannt sein und daher dort nicht leicht vom Rahmen angehoben werden, während die mechanische Spannung im Bereich der Schwenkscharniere, in denen das Befestigungsmittel näher an der Rahmenaußenkante läuft, aufgrund der Flächenverteilung hinreichend klein ist, um ein Ausleiern oder ein Einreißen des Gewirkes zu verhindern.

Gemäß einer Alternative verläuft das Befestigungsmittel, insbesondere der besagte Keder, überwiegend näher an der Profilaußenkante als an der Profilinnenkante des ersten Rahmens. Im Extremfall läuft das Befestigungsmittel über seine ganze Länge näher an der Profilaußenkante, vorzugsweise dann im konstanten Abstand zu dieser. Hierdurch wird eine optische Einheitlichkeit erzielt; insbesondere können Strukturelemente des Rahmens verdeckt werden.

Vorteilhafterweise überdeckt die Flachmaterialbahn - in der Draufsicht gesehen - zu mehr als 70%, vorzugsweise zu mehr als 80% und besonders bevorzugt zu mehr als 90% der Rahmenprofile. Hierdurch können insbesondere gespritzte Kunststoff-Verstärkungsrippen von der Flachmaterialbahn überdeckt werden. Auf einen Rahmendeckel, der ansonsten bekanntermaßen solche Rippen zu verdecken hat, kann verzichtet werden. Dies spart Kosten sowie Teile und somit auch Montageaufwand.

Mit Vorteil ist die Flachmaterialbahn alternativ oder zusätzlich im Bereich der Rahmenprofilüberdeckung blickdichter ausgestaltet als im Bereich der freien Fläche zwischen den Rahmenprofilen. Eine solche Blickdichtigkeit, die zur optischen Verdeckung von insbesondere Verstärkungsrippen des Rahmens dient, kann auf verschiedene Art und Weise erreicht werden. Beispielsweise kann die Flachmaterialbahn in den überdeckenden Bereichen dichter gewirkt sein, während in den rahmenfreien Bereichen eine größere Blick- und auch Luftdurchlässigkeit gegeben ist. Der Blickdichteffekt lässt sich sowohl mit dem gleichen Gewirkematerial als auch - für die beiden unterschiedlichen Bereiche (Rahmenüberdeckung, freie Flächen) - unterschiedlichen Gewirkematerialien erreichen, die im letzteren Fall beispielsweise miteinander vernäht oder verschweißt sind.

Die besagten Knickkanten werden gemäß einer bevorzugten Ausführungsform durch eine Konditionierung, vorzugsweise durch vorheriges Heißprägen oder durch in der betreffenden Flachmaterialbahn voreingebrachte Nähte vordefiniert. Die Faltgeometrie und die Reihenfolge der Faltenentstehung sind somit vorgebbar, was optisch ansehnlicher sein kann und evtl. zur mechanischen Entlastung beiträgt.

Eine vorteilhafte Ausführung sieht vor, dass die Befestigungsmittel ein lokal im Bereich der Mehrfachfaltung am Rahmen fixiertes und die Flachmaterialbahn und/oder den Keder lagesicherndes Sicherungselement umfassen. Die Fixierung kann beispielsweise durch eine Verschraubung oder Vernietung realisiert werden. Das Sicherungselement kann hierbei als Einsetzstein ausgebildet sein, der in oder über der vorbesagten Nut platziert und dort die Flachmaterialbahn und/oder den Keder derart sichert, dass diese bzw. dieser - trotz eventueller mechanischer Spannungen auf die Flachmaterialbahn und/oder den Keder - nicht aus der Nut gehebelt werden kann. Das Sicherungselement unterstützt somit einerseits wirkungsvoll die Klemmwirkung des Keders, andererseits kann sich an ihm die erste Knickkante der Mehrfachfaltung bilden.

Weitere Merkmale und Vorteile der Erfindung sind den Ansprüchen sowie der sich anschließenden Figurenbeschreibung zu entnehmen. Es zeigen:
- **Fig. 1**: eine in einem PKW eingesetzte Windschottvorrichtung;
- **Fig. 2**: eine perspektivische Ansicht der Windschottvorrichtung (in Gebrauchsposition);
- **Fig. 3**: die Windschottvorrichtung der Fig. 2 in Seitenansicht;
- **Fig. 4**: die Windschottvorrichtung gemäß der Fig. 2 und 3, perspektivisch von oben gesehen (in Zwischenposition);
- **Fig. 5**: die geringfügig schematisiert dargestellte Windschottvorrichtung der Fig. 2 bis 4 in Draufsicht (in Zwischenposition);
- **Fig. 6**: die Unterseite der Windschottvorrichtung der Fig. 2 bis 5 in perspektivischer Darstellung (in Zwischenposition);
- **Fig. 7**: einen Schnitt entlang A-A durch die Windschottvorrichtung in Zwischenposition (Unterseite oben);
- **Fig. 8**: die beiden Schwenkscharniere auf der Unterseite des ersten Rahmens in perspektivischer Sicht;
- **Fig. 9**: eine Detailansicht der Fig. 8;
- **Fig. 10**: eine Darstellung von lediglich einer Hälfte der Windschottvorrichtung, in zusammengeklappter Aufbewahrposition der Windschottvorrichtung ;
- **Fig. 11**: eine Detailansicht der Fig. 10;
- **Fig. 12**: eine Ansicht wie in Fig. 6, allerdings hier halb gefaltet zwischen Zwischenposition und Aufbewahrposition (von der Unterseite gesehen);
- **Fig. 13**: die Windschottvorrichtung in gleicher Position wie in Fig. 12, von der Oberseite gesehen;
- **Fig. 14**: eine Detailansicht der Fig. 13;
- **Fig. 15**: einen schematische Querschnittsdarstellung durch ein Schwenkscharnier des ersten (äußeren), halb aufgeklappten Rahmens mit darin befestigter Flachmaterialbahn;
- **Fig. 16**: eine zweite Variante zur Ausführung gemäß der Fig. 15;
- **Fig. 17**: eine Draufsicht auf die Unterseite einer weiteren Ausführungsform eines Rahmens, und
- **Fig. 18**: eine Draufsicht auf die Unterseite einer wiederum anderen Ausführungsform eines Rahmens.

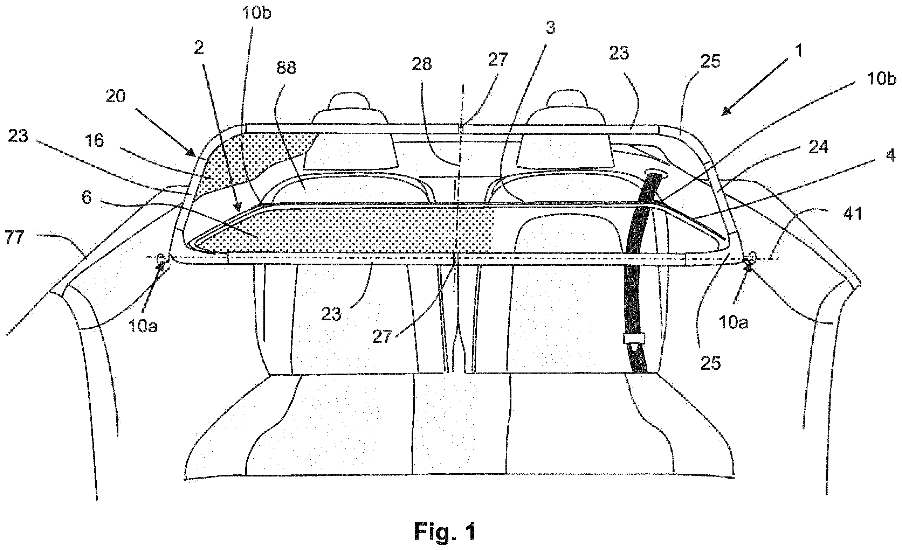

Eine Windschottvorrichtung 1 entsprechend der Fig. 1 umfasst einen als ersten Rahmen 2 ausgebildeten Abdeckungsrahmen, welcher einerseits der Befestigung der Windschottvorrichtung 1 in dem nur teilweise dargestellten Personenkraftfahrzeug dient, andererseits einen Teilbereich einer Fahrgastraumöffnung des Fahrzeugs abdeckt. Der erste Rahmen 2, der im Folgenden als Abdeckungsrahmen 2 bezeichnet wird, erstreckt sich im Wesentlichen parallel zu einer Gürtellinie 77 des Kraftfahrzeugs bis hin zu den Lehnen der Rücksitze 88. Der Raum unterhalb des Abdeckungsrahmens 2 kann somit als Stauraum genutzt werden.

Außerdem umfasst die in Fig. 1 dargestellte Windschottvorrichtung 1 einen als zweiten Rahmen 20 ausgebildeten Windschottrahmen (im Folgenden als Windschottrahmen 20 bezeichnet). Der Windschottrahmen 20 ist mittels eines länglichen Klappscharniers 40 um eine Klappachse 41 an dem Abdeckungsrahmen 2 schwenkbar angeordnet. Das Klappscharnier 40 ist an Querprofilen 3 bzw. 23 des Abdeckungsrahmen 2 bzw. des Windschottrahmens 20 angebracht. Die Querprofile 3 bzw. 23 erstrecken sich quer zur Fahrzeuglängsrichtung und sind über Eckprofile 5 bzw. 25 mit Längsprofilen 4 bzw. 24, die sich in Draufsicht gesehen in Fahrzeuglängsrichtung erstrecken, verbunden.

In den Fig. 1-3 ist der Windschottrahmen 20 aufgeklappt in Gebrauchsposition dargestellt und erstreckt sich hierbei (Fig. 1) im Wesentlichen über die Breite des Insassenraums, wobei er nahezu senkrecht hinter den hier nicht dargestellten Kopfstützen der Vordersitze positioniert ist.

Zur Befestigung der Windschottvorrichtung 1 in dem Fahrzeug weist es vordere und hintere Fixiereinrichtungen 10a, 10b auf, mittels welcher der Abdeckungsrahmen 2 in dem Fahrzeug fixiert wird. Diese können beispielsweise als ausfahrbare oder starre Stifte ausgebildet sein.

Der Abdeckungsrahmen 2 sowie auch der Windschottrahmen 20 sind weitgehend steif ausgebildet. In beiden Rahmen 2 bzw. 20 ist jeweils eine windabweisende Flachmaterialbahn 6, 26 aufgespannt, welche aus Gründen der Übersichtlichkeit nur zum Teil angedeutet sind. Die Flachmaterialbahnen 6, 26 sind beispielsweise windabweisend ausgeführt, können jedoch auch aus einem luftdurchlässigen Material wie einem Netz oder Gewirke hergestellt sein.

Um die Windschottvorrichtung 1 bei Nichtgebrauch platzsparend verstauen zu können, weisen sowohl der Abdeckungsrahmen 2 als auch der Windschottrahmen 20 jeweils mittig zwei Schwenkscharniere 7 bzw. 27 auf. Die Schwenkscharniere 7 definieren eine Schwenkachse 8, während die Schwenkscharniere 27 eine Schwenkachse 28 definieren. Hierdurch ist der Abdeckungsrahmen 2 durch die Schwenkachse 8 in zwei Teilrahmen 9a, 9b unterteilt, während der Windschottrahmen 20 durch die Schwenkachse 28 in zwei Teilrahmen 29a, 29b unterteilt ist.

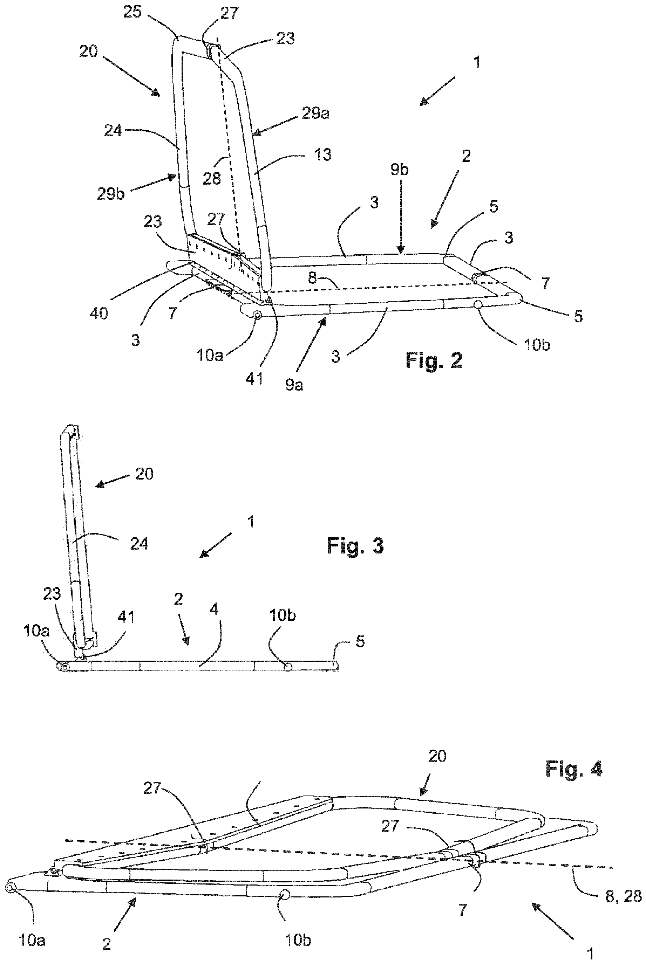

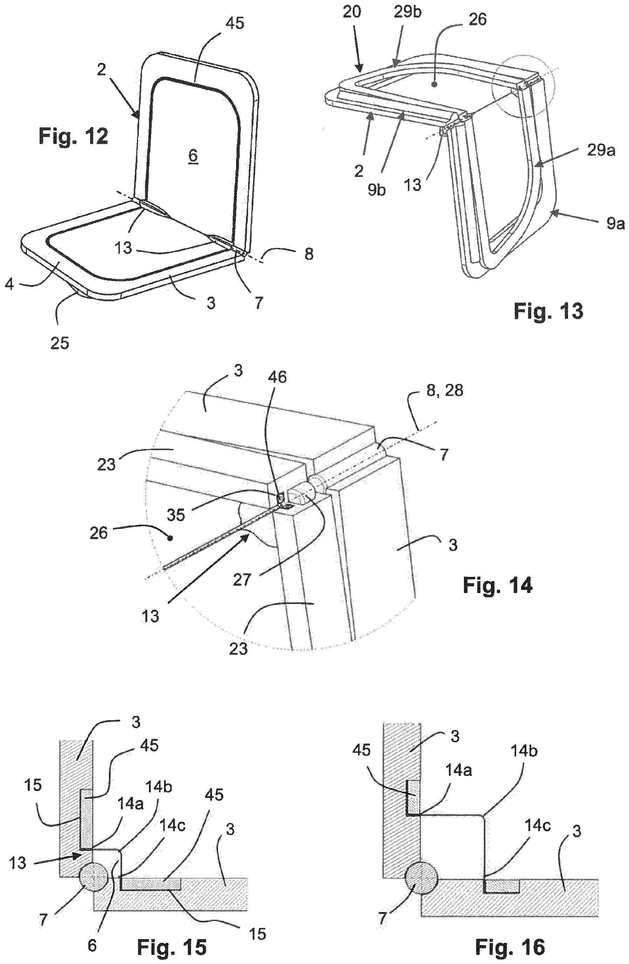

Um die Windschottvorrichtung 1 zweifach von einer Gebrauchsposition in eine Aufbewahrposition zu falten, wird der Windschottrahmen 20 auf den Abdeckungsrahmen 2 in eine Zwischenposition entsprechend der Fig. 4 bis 7 abgeklappt. Hierbei fallen bei der dargestellten Ausführungsform die beiden Achsen 8 und 28 zusammen. Dies wird ermöglicht, indem die beiden Längsprofile 24 des Windschottrahmens 20 in der vorgenannten Zwischenposition mit einem konstanten Winkel gegenüber der Ebene des Abdeckungsrahmens 2 bzw. dessen Flachmaterialbahn 6 in entsprechend ausgestaltete Ausnehmungen in den Längsprofilen 4 des Abdeckungsrahmens 2 eintauchen, bis die Achsen 8 und 28 zusammenfallen. Hierbei liegt auch das von der Schwenkachse 41 entfernte Querprofil 23 des Windschottrahmens 20 im Wesentlichen in der von den Profilen 3, 4, 5 aufgespannten Ebene des Abdeckungsrahmens 2. Aus dieser Zwischenposition kann dann die Windschottvorrichtung 1 um die gemeinsame Achse 8, 28 in die Aufbewahrposition geklappt werden (s. hierzu die Fig. 12 und 13).

Es sei angemerkt, dass jeder der Teilrahmen 9a, 9b bzw. 29a, 29b aus mehreren Abschnitten besteht, die vorliegend als zusammengesteckte und miteinander fest verbundene Profilelemente ausgeführt sind. Wenn in der vorliegenden Darstellung von "Abschnitten" oder "Profilen" oder "Profilelementen" die Rede ist, können diese ein- oder mehrstückig ausgebildet sein. Ein Teilrahmen kann beispielsweise aus einem einzigen Stück gefertigt sein und weist entsprechend der hier verwendeten Terminologie auch in diesem Fall Quer- und Längsprofile auf. Die beiden Teilrahmen 9a, 9b bzw. 29a, 29b können alternativ aus einer Mehrzahl von Einzelteilen gefertigt sein.

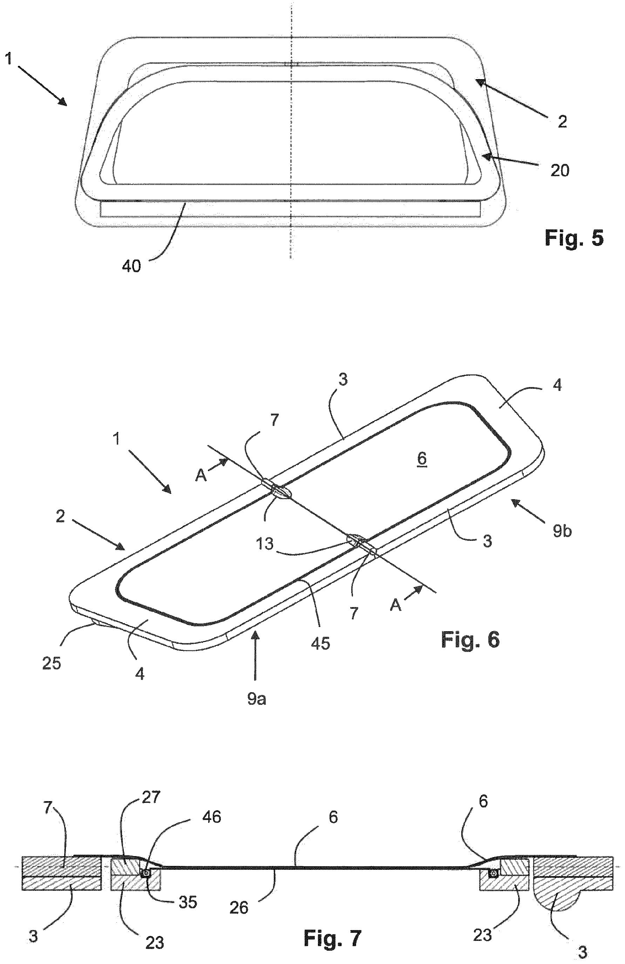

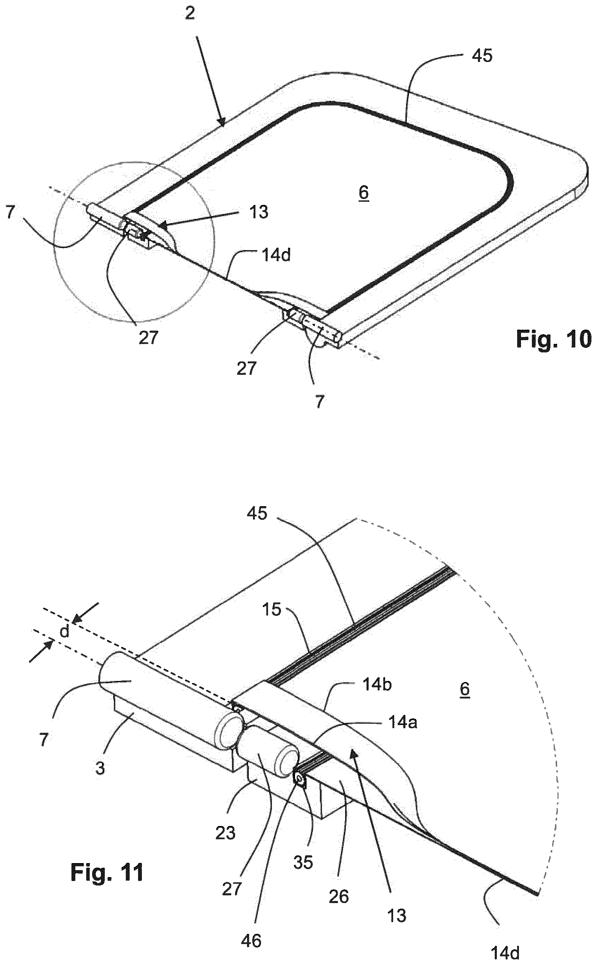

In den Fig. 4 bis 7 - ab der Fig. 5 in eher schematischer Darstellung im Vergleich zu den Fig. 2 bis 4 - ist die Windschottvorrichtung 1 in der vorgenannten Zwischenposition dargestellt, in welcher der zweite Rahmen bzw. Windschottrahmen 20 nach Lösen einer nicht dargestellten Verriegelung auf den ersten Rahmen bzw. Abdeckungsrahmen 2 abgelegt ist. Die Windschottvorrichtung 1 ist in Fig. 5 von der Oberseite mit Blick auf den Windschottrahmen 20 dargestellt, während die Fig. 6 in perspektivischer Ansicht deren Unterseite mit Blick auf den Abdeckungsrahmen 2 zeigt. In der Schnittansicht gemäß der Fig. 7 sind die beiden Querprofile 3 bzw. 23 und die zwischen ihnen eingespannten Flachmaterialbahnen 6 bzw. 26 des Abdeckungsrahmens 2 bzw. des Windschottrahmens 20 sowie die entsprechenden Schwenkscharniere 7 bzw. 27 dargestellt. Hierbei ist lediglich für die Flachmaterialbahn 26 ein Befestigungsmittel 46 dargestellt, das vorliegend als den Rand des Flachbahnmaterials 26 einklemmender Keder (nachfolgend auch mit dem Bezugszeichen 46 bezeichnet) ausgebildet ist, der zusammen mit dem vorbesagten Flachmaterialrand in eine Nut 35 mit rechtwinkligem Querschnitt eingepresst ist. Die im Windschottrahmen 20 laufende, an ihren beiden Stirnseiten offene (d.h. stirnseitig aus dem Querprofil 23 austretende) Nut 35 beginnt hierbei in unmittelbarer Nähe vor - d.h. in Richtung zum Rahmeninnenraum hin - einem der Schwenkscharniere 27 (s. Fig. 11) und läuft entlang des entsprechenden Teilrahmens 29a bzw. 29b zum anderen Schwenkscharnier 27. In jedem der beiden Teilrahmen 29a, 29b ist also jeweils ein Keder 46 vorgesehen, die daher für eine kontinuierlich gleichmäßige Fixierung der Flachmaterialbahn 26 sorgen. Durch die vorgenannte Fixierung der Flachmaterialbahn 26 faltet sich diese in der Zwischen- und Aufbewahrposition der Windschottvorrichtung 1 auf ihrer gesamten Länge linear. Die Keder 46 bestehen vorzugsweise aus einem gummiartigen Material, z.B. EPDM (Ethylen-Propylen-Dien-Kautschuk) oder NBR (Nitril-Butadien-Kautschuk), und verkeilt den Rand der Flachmaterialbahn 26 in der Nut 35.

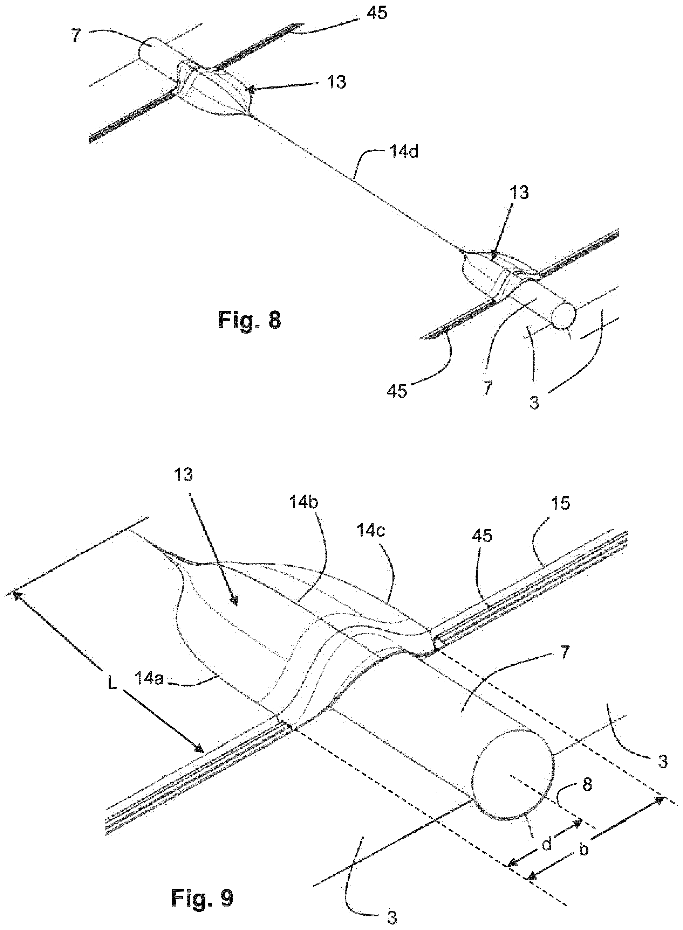

Wie in der Fig. 7 angedeutet und in den Fig. 8 bis 11 genauer dargestellt, ist auch der Rand der Flachmaterialbahn 6 in jedem Teilrahmen 9a bzw. 9b mit jeweils einem als Keder ausgebildeten Befestigungsmittel 45 (der Keder erhält im Folgenden auch das Bezugszeichen 45 und ist vorzugsweise von gleicher Art wie der Keder 46) in jeweils einer Nut 15 gehalten, wobei die jeweilige Nut 15 auch hier in jedem Teilrahmen 9a, 9b von einem Schwenkscharnier 7 zum anderen Schwenkscharnier 7 verläuft. Allerdings endet die jeweilige Nut 15 bei der dargestellten Ausführungsform mit einem Abstand von einigen Millimetern vor dem jeweiligen Schwenkscharnier 7 (s. Fig. 9 und 11), ist also im Gegensatz zu den Nuten 35 im Windschottrahmen 20 stirnseitig geschlossen. Der in der Fig. 9 eingezeichnete Abstand d vom Ende der Nut 15 bis zur Schwenkachse 8 beträgt beispielsweise 3 mm (bei aufgeklapptem Rahmen 2), die Breite b des die erfindungsgemäße Mehrfachfaltung mit Knickkanten 14a, 14b, 14c (s.u.) bildenden Randbereichs der Flachmaterialbahn 6 daher vorliegend ca. 6 mm. Aus diesem Grund sind die Nuten 15 und die Keder 45 in der Schnittdarstellung der Fig. 7 nicht sichtbar.

Die Nuten 35 und die Keder 46 sind in den Fig. 8 und 9 nicht sichtbar, da sie von der Flachmaterialbahn 6 verdeckt sind - im Gegensatz zu den Fig. 10 und 11, da in diesen Figuren jeweils ein Teilrahmen des Windschott- und des Abdeckungsrahmens nicht dargestellt ist. In den Fig. 10 und 11 ist demgemäß auch nur eine Hälfte der erfindungsgemäßen Mehrfachfaltung abgebildet - es ist daher auch die untere Knickkante 14a und der von der Knickkante 14a zur Knickkante 14b ansteigende Abschnitt der Flachmaterialbahn 6 zu sehen (s. hierzu genauer die Fig. 14-16).

Den Fig. 7 bis 11 ist des Weiteren zu entnehmen, dass sich die Randbereiche 13 der Flachmaterialbahn 6, die nahe der Schwenkscharniere 7 angeordnet sind, bei aufgeklapptem Abdeckungsrahmen 2 über die Schwenkscharniere 7 in Form einer Wölbung erstrecken. Diese Wölbung entsteht allein durch eine Dehnung des Materials der Flachmaterialbahn 6; es braucht also nicht zusätzliches Material in diesen Bereichen vorgesehen sein, beispielsweise eingenäht oder eingewirkt werden - obwohl diese Variante im Rahmen der Erfindung mit umfasst ist. Vorliegend ist die natürliche Dehnung der Flachmaterialbahn 6 ausreichend, da die Nuten 15 mit einem Abstand von beispielsweise mehr als 2 cm von der Stirnseite der Querprofile 3 bzw. des jeweiligen Schwenkscharniers 7 enden. Die Spannung auf den sich wölbenden Randbereichen 13 verteilt sich somit auf eine relativ große Fläche.

Die Wölbung der Randbereiche 13 über die Schwenkscharniere 27 haben den Vorteil, dass in diesen Bereichen 13 der Flachmaterialbahn 6 keine Aussparungen vonnöten sind, damit die Schwenkscharniere 27 hindurchtreten können. Vielmehr erstrecken sich gemäß der Erfindung diese Randbereiche 13 über die Schwenkscharniere.

Wie aus den Fig. 12 bis 16 ersichtlich, kann die Windschottvorrichtung 1 in der in den Fig. 5 bis 11 dargestellten Zwischenposition in die Aufbewahrposition gefaltet werden. Hierbei befinden sich die gewölbten Randbereiche 13 der Flachmaterialbahn 6 auf der Innenseite, so dass sich diese Randbereiche 13 entspannen. In den Fig. 14 bis 16 ist dargestellt, wie sich die Randbereiche 13 in Form einer Mehrfachfaltung mit Knickkanten 14a, 14b, 14c von den Schwenkscharnieren 7 des Abdeckungsrahmens 2 (Fig. 15, 16, die jeweils vereinfacht dargestellte Schnitte durch zwei Varianten eines halb auf- bzw. zugeklappten Abdeckungsrahmens 2 zeigen) sowie auch von den Schwenkscharnieren 27 des Windschottrahmens 20 (Fig. 14) wegfalten. Im vollständig geklappten Zustand liegen die beiden Knickkanten 14a, 14c unmittelbar nebeneinander, während die Knickkante 14b weiter in Richtung des Rahmeninnenraums liegt, d.h. weiter vom Schwenkscharnier 7 entfernt.

In der Fig. 9 sind die beim Zusammenklappen des Rahmens 2 entstehenden Knickkanten 14a, 14b, 14c schon eingezeichnet.

Wie des Weiteren in den Fig. 8 bis 11 zu sehen ist, geht die Mehrfachfaltung mit ihren Knickkanten 14a, 14b, 14c zum vom Abdeckungsrahmen 2 eingeschlossenen Innenraum hin in eine einzige Knickkante 14d über. Die Länge L der Mehrfachfaltung (s. Fig. 9) beträgt einige Millimeter bis Zentimeter, vorzugsweise mehr als 8 mm und hängt, wie aus den Figuren ersichtlich ist, von der Länge der Schwenkscharniere 7, 27 ab. Die Länge der Faltung mit nur einer Knickkante 14d ist wesentlich länger als die Summe der Längen, über die sich die beiden Mehrfachfaltungen erstrecken. Wie des Weiteren insbesondere der Fig. 9 entnehmbar ist, laufen die Knickkanten 14a, 14b, 14c beginnend am Flachmaterialbahnrand in Richtung zur Rahmenmitte zunächst nebeneinander und im Wesentlichen parallel zur Schwenkachse 8, bevor sie in die einzige Knickkante 14d übergehen, welche ebenfalls in Richtung der Schwenkachse 8 verläuft.

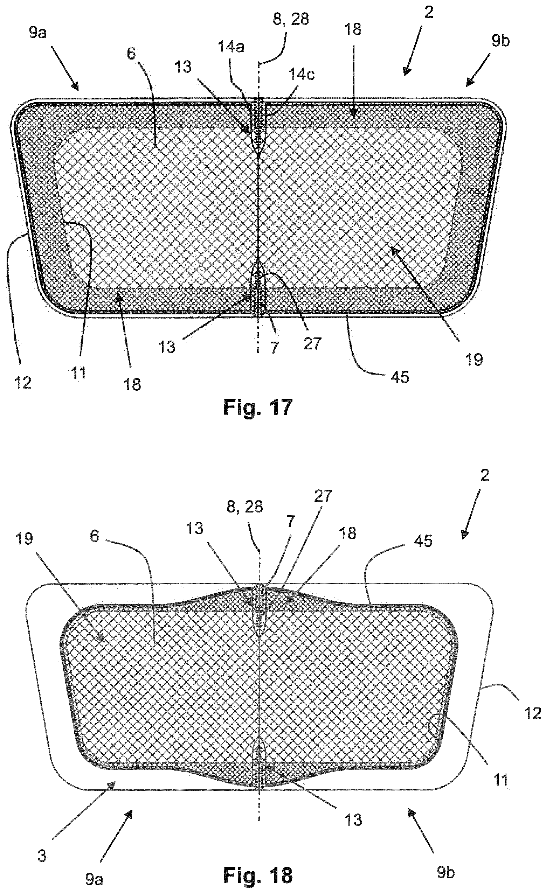

In den Fig. 17 und 18 sind zwei weitere und zueinander verschiedene Ausführungsformen eines ersten Rahmens 2 von dessen Unterseite dargestellt, wobei der Rahmen 2 als einzelner Rahmen oder auch als erster Rahmen einer Windschottvorrichtung mit zwei Rahmen 2, 20 entsprechend der Fig. 1-16 ausgebildet sein kann. Anhand der Fig. 17 und 18 werden im Folgenden auch als unabhängig anzusehende Erfindungsaspekte näher erläutert.

Bei der Ausführungsform gemäß der Fig. 17 verläuft das Befestigungsmittel bzw. der Keder 45 in Gänze nahe der Außenkante 12 des ersten Rahmens 2. Die nur schematisch angedeuteten Schwenkscharniere 7 und 27 (bei einer Windschottvorrichtung 1 mit zwei Rahmen 2, 20) sind von der Flachmaterialbahn 6 vollständig verdeckt. Der die Flachmaterialbahn 6 einspannende Keder 45 endet im Teilrahmen 9a mit einem Abstand von einigen Millimetern bis Zentimetern vor der Schwenkachse 8 (entsprechend dem Abstand d in den Fig. 9 und 11), so dass sich an dieser Position eine Knickkante 14a in der Flachmaterialbahn 6 bilden kann. (Es ist zu betonen, dass die Fig. 10 und 11 die Windschottvorrichtung in zweifach gefalteter Aufbewahrposition zeigen.) Zusammen mit der Knickkante 14c an der gegenüberliegenden Seite des Befestigungsmittels 45 des anderen Teilrahmens 9b bilden die beiden Knickkanten 14a, 14c - zusammen mit der mittleren Knickkante 14b - die besagte Mehrfachfaltung.

Da die beiden Befestigungsmittel bzw. Keder 45 über ihre ganze Länge mit konstantem Abstand nahe der Profilaußenkante 12 verlaufen, können Strukturelemente, insbesondere angespritzte Verstärkungsrippen, in dem Rahmen 2 verdeckt werden, wenn dieser zumindest teilweise im Kunststoffspritzverfahren hergestellt ist. Vorteilhafterweise ist dann kein Rahmendeckel notwendig, zumal auch die Nuten 15 keine Hinterschneidungen aufweisen, die ebenfalls einen Rahmendeckel bedingen würden. Bei der in Fig. 17 dargestellten Ausführungsform sind mehr als ca. 80% der Profilelemente des Rahmens 2 überdeckt. Es ist hierbei von Vorteil, wenn - wie zeichnerisch angedeutet - die Flachmaterialbahn 6 in den die Profilelemente des Rahmens 2 überdeckenden Bereichen 18 blickdichter ausgestaltet ist als in den freien Bereichen 19 zwischen diesen Profilelementen. Die größere Blickdichtigkeit kann durch unterschiedliche Materialverarbeitung des Gewirkestoffes und/oder durch eine andere Materialwahl erreicht werden.

In der Fig. 18 ist eine alternative Ausführungsform dargestellt, bei welcher der Keder 45 im Bereich der Schwenkscharniere 7, 27 nahe der Außenkante 12 des Rahmens 2 verläuft, während er in den übrigen Rahmenabschnitten nahe dessen Innenkante 11 angeordnet ist. Wegen der geringeren Größe der Flachmaterialbahn 6 im Vergleich zur Ausführungsform gemäß der Fig. 17 kann ggf. eine größere Spannung in der Flachmaterialbahn 6 erreicht werden.

Die Vorteile der Erfindung bei der in den Figuren dargestellten Windschottvorrichtung liegen insbesondere darin, dass die Belastung auf die Flachmaterialbahn 6 des größeren Rahmens, d.h. des Rahmens 2, in welchen der kleinere Rahmen, d.h. der Rahmen 20, eintaucht, im Bereich der Schwenkscharniere 7, 27 deutlich reduziert wird.

Die Erfindung ist nicht auf die dargestellten Ausführungsformen beschränkt. Abwandlungen der Erfindung innerhalb der Ansprüche sind ohne Weiteres möglich. So kann die Erfindung insbesondere in einer Windschottvorrichtung mit nur einem einzigen Rahmen realisiert werden, der zwei mittels Schwenkscharnieren verbundene Teilrahmen aufweist. Auch sind andere Geometrien von Mehrfachfaltungen der Flachmaterialbahn im ersten Rahmen ohne Weiteres möglich. Des Weiteren kann die Erfindung auch bei einem einzelnen Schwenkscharnier vorgesehen sein, mit dem ein Rahmenteil gegen einen anderen verschwenkt werden kann. Auch sind von der Erfindung Rahmen umfasst, bei denen die Schwenkachse quer oder längs - bezogen auf die Einbausituation im Fahrzeug - zur Fahrzeuglängsrichtung verläuft. Zu erwähnen ist auch, dass die Befestigungsmittel nicht nur Keder umfassen können, sondern zusätzlich zu den Kedern auch Sicherungselemente bzw. Endstücke in die Kedernut eingeführt oder auf diese aufgesetzt werden und das Kederende in der Nut festhalten. Die vorgenannte Breite einer Mehrfachfaltung, welche durch die geometrische Anordnung der Befestigungsmittel definiert ist, kann somit (anstelle von zwei Kederenden) auch von dem Abstand zweier sich gegenüberliegender und von einem dazwischenliegenden Schwenkscharnier getrennter Sicherungselemente bestimmt sein. Wie im Übrigen zuvor schon erwähnt, können die im ersten Rahmen eingespannten Randbereiche, welche sich zur erfindungsgemäßen Mehrfachfaltung falten, sich lediglich über das Schwenkscharnier des vorgenannten zweiten Rahmens wölben, nicht aber über das Schwenkscharnier des ersten Rahmens. Stattdessen kann eine Aussparung in diesen Randbereichen vorgesehen sein, durch welche das Schwenkscharnier des ersten Rahmens hindurchtaucht. Zuletzt ist zu bemerken, dass die im ersten und im zweiten Rahmen eingespannten Flachmaterialbahnen von nur einer einzigen, gemeinsamen Flachmaterialbahn gebildet sein können, die also zum Teil in dem ersten und zum Teil in dem zweiten Rahmen eingespannt ist.

### Bezugszeichenliste

- 1: Windschottvorrichtung
- 2: erster Rahmen (Abdeckungsrahmen)
- 3: Querprofil
- 4: Längsprofil
- 5: Eckprofil
- 6: Flachmaterialbahn
- 7: Schwenkscharnier
- 8: Schwenkachse
- 9a,b: Teilrahmen des ersten Rahmens
- 10a,b: Fixiereinrichtungen
- 11: Profilinnenkante
- 12: Profilaußenkante
- 13: Randbereiche der Flachmaterialbahn
- 14a,b,c: Knickkanten
- 14d: einzelne Knickkante
- 15: Nut im ersten Rahmen
- 16: Mehrfachfaltung
- 18: Überdeckungsbereich
- 19: Bereich freier Fläche
- 20: zweiter Rahmen (Windschottrahmen)
- 23: Querprofil
- 24: Längsprofil
- 25: Eckprofil
- 26: Flachmaterialbahn
- 27: Schwenkscharnier
- 28: Schwenkachse
- 29a,b: Teilrahmen des zweiten Rahmens
- 35: Nut im zweiten Rahmen
- 40: Klappscharnier
- 41: Klappachse
- 45: Befestigungsmittel im ersten Rahmen
- 46: Befestigungsmittel im zweiten Rahmen
- 77: Gürtellinie
- 88: Rücksitze

## Patentansprüche

1. Windschottvorrichtung für ein Personenkraftfahrzeug mit mindestens einem ersten Rahmen (2), der mindestens zwei Teilrahmen (9a, 9b) aufweist, die mittels mindestens eines Schwenkscharniers (7) schwenkbar um eine Schwenkachse (8) miteinander verbunden sind, und mit einer im Rahmen (2) durch mindestens ein Befestigungsmittel (45) fixierten Flachmaterialbahn (6), **dadurch gekennzeichnet, dass** die Flachmaterialbahn (6) derart im Rahmen (2) befestigt ist, dass sich im Bereich des mindestens einen Schwenkscharniers (7) angeordnete Randbereiche (13) der Flachmaterialbahn (6), welche außerhalb oder in einer Ebene mit der Schwenkachse (8) liegen, beim Zusammenklappen des Rahmens (2) in Form einer Mehrfachfaltung mit mehreren Knickkanten (14a, 14b, 14c) falten, und wobei sich die Flachmaterialbahn (6) in den besagten Randbereichen (13) im ausgeklappten Zustand des ersten Rahmens (2) über das mindestens eine Schwenkscharnier (7) in Form einer Wölbung erstreckt.

2. Windschottvorrichtung nach Anspruch 1, **dadurch gekennzeichnet. dass** ein zweiter Rahmen (20), der ebenfalls mittels mindestens eines Schwenkscharniers (27) in zwei Teilrahmen (29a, 29b) zum Schwenken um eine Schwenkachse (28) unterteilt ist und eine im zweiten Rahmen (20) befestigte Flachmaterialbahn (26) aufweist, vorgesehen ist, wobei der zweite Rahmen (20) mit dem ersten Rahmen (2) um eine Klappachse (41) schwenkbar verbunden ist, so dass die Windschottvorrichtung (1) aus einer mindestens zweifach gefalteten Aufbewahrposition in eine Zwischenposition und weiter in eine Gebrauchsposition auffaltbar und in umgekehrter Reihenfolge wieder zusammenfaltbar ist, wobei weiterhin die besagten Randbereiche (13) der im ersten Rahmen (2) eingespannten Flachmaterialbahn (6) in der Zwischenposition der Windschottvorrichtung (1) sich über das mindestens eine Schwenkscharnier (27) der beiden Teilrahmen (29a, 29b) des zweiten Rahmens (20) wölbend erstrecken, und beim Zusammenfalten von der Zwischenposition in die Aufbewahrposition sich die besagten Randbereiche (13) der Flachmaterialbahn (6) von diesem mindestens einen Schwenkscharnier (27) unter Bildung der besagten Mehrfachfaltung (14a, 14b, 14c) wegbeugen.

3. Windschottvorrichtung nach Anspruch 2, **dadurch gekennzeichnet, dass** in der Aufbewahrposition zumindest Teile des zweiten Rahmens (20) in den ersten Rahmen (2) eintauchen und die Schwenkachsen (8, 28) der jeweiligen Teilrahmen (9a, 9b, 29a, 29b) der beiden Rahmen (2, 20) zusammenfallen.

4. Windschottvorrichtung nach Anspruch 2 oder 3, **dadurch gekennzeichnet, dass** der erste Rahmen (2) als Abdeckungsrahmen (2) zum Abdecken des Fahrzeuginnenraums hinter Fahrer- und Beifahrersitz und der zweite Rahmen (20) als Windschottrahmen (20) zum Aufstellen im Fahrzeug ausgebildet ist.

5. Windschottvorrichtung nach einem der vorhergehenden Ansprüche, **dadurch gekennzeichnet, dass** die Mehrfachfaltung mit ihren mehreren Knickkanten (14a, 14b, 14c), die vorzugsweise abschnittsweise im Wesentlichen parallel verlaufen, in Richtung des Innenraums des ersten Rahmens (2) hin in eine einzige Knickkante (14d) übergeht.

6. Windschottvorrichtung nach einem der vorhergehenden Ansprüche, **dadurch gekennzeichnet, dass** die Länge (L) der jeweiligen Mehrfachfaltung in ihrer Axialrichtung mindestens 8 mm, vorzugsweise mehr als 12 mm beträgt.

7. Windschottvorrichtung nach einem der vorhergehenden Ansprüche, **dadurch gekennzeichnet, dass** die Breite (b) eines eine Mehrfachfaltung bildenden Randbereichs bei aufgeklappter Windschottvorrichtung (1) mindestens 5 mm, vorzugsweise mehr als 10 mm, beträgt.

8. Windschottvorrichtung nach einem der vorhergehenden Ansprüche, **dadurch gekennzeichnet, dass** die Mehrfachfaltung im Wesentlichen drei Knickkanten (14a, 14b, 14c) aufweist.

9. Windschottvorrichtung nach einem der vorhergehenden Ansprüche, **dadurch gekennzeichnet, dass** das Befestigungsmittel (45) für die im ersten Rahmen eingespannte Flachmaterialbahn mindestens einen Keder (45) umfasst, der in einer Halterung, vorzugsweise einer Nut (15), des ersten Rahmens (2) eingelegt ist und dort die Flachmaterialbahn (6) randseitig einspannt.

10. Windschottvorrichtung nach einem der vorhergehenden Ansprüche, **dadurch gekennzeichnet, dass** das Befestigungsmittel (45) für die im ersten Rahmen (2) eingespannte Flachmaterialbahn (6), vorzugsweise in Form eines Keders (45), zumindest im Bereich der Schwenkscharniere (7) des ersten Rahmens (2) näher an der Profilaußenkante (12) als an der Profilinnenkante (11) des ersten Rahmens (2) verläuft.

11. Windschottvorrichtung nach einem der vorhergehenden Ansprüche, **dadurch gekennzeichnet, dass** das Befestigungsmittel (45) für die im ersten Rahmen (2) eingespannte Flachmaterialbahn (6), insbesondere der besagte Keder (45), in dem ersten Rahmen (2) mit einem variierenden Abstand von der Profilinnenkante (11) des ersten Rahmens (2) verläuft.

12. Windschottvorrichtung nach einem der vorhergehenden Ansprüche, **dadurch gekennzeichnet, dass** das Befestigungsmittel (45) für die im ersten Rahmen (2) eingespannte Flachmaterialbahn (6), insbesondere der besagte Keder, überwiegend näher an der Profilaußenkante (12) als an der Profilinnenkante (11) des ersten Rahmens (2) verläuft.

13. Windschottvorrichtung nach einem der vorhergehenden Ansprüche, **dadurch gekennzeichnet, dass** die im ersten Rahmen (2) eingespannte Flachmaterialbahn (6) Rahmenprofile (3, 4, 5) des ersten Rahmens, gesehen in Draufsicht, überdeckt, vorzugsweise zu mehr als 70%, bevorzugt zu mehr als 80% und besonders bevorzugt zu mehr als 90%, dieser Rahmenprofilelemente (3, 4, 5) und/oder dass die Flachmaterialbahn (6) im Bereich der Rahmenprofilüberdeckung (18) blickdichter ausgestaltet ist als im Bereich der freien Fläche (19) zwischen den Rahmenprofilen (3, 4, 5).

14. Windschottvorrichtung nach einem der vorhergehenden Ansprüche, **dadurch gekennzeichnet, dass** die Knickkanten (14a, 14b, 14c) durch eine Konditionierung, vorzugsweise mittels Heißprägens oder in der betreffenden Flachmaterialbahn (6) vorgesehene Nähte, vordefiniert sind.

15. Windschottvorrichtung nach einem der vorhergehenden Ansprüche, **dadurch gekennzeichnet, dass** die Befestigungsmittel (45) ein lokal im Bereich der Mehrfachfaltung mit ihren mehreren Knickkanten (14a, 14b, 14c) am Rahmen (2) fixiertes, beispielsweise verschraubtes oder vernietetes, Sicherungselement, beispielsweise in Form eines Einsetzsteins, für die Flachmaterialbahn (6) und/oder einen die Flachmaterialbahn (6) klemmenden Keder umfassen, an dem sich eine Knickkante (14a, 14c) der Mehrfachfaltung bildet.

## Claims

1. A wind deflecting device for a passenger car, having at least a first frame (2) comprising at least two partial frames (9a, 9b) pivotally connected to each other about a pivot axis (8) by means of at least one pivot hinge (7), and having a flat material web (6) fixed in the frame (2) by at least one fastening means (45), **characterized in that** the flat material web (6) is fastened in the frame (2) such that edge regions (13) of the flat material web (6) disposed in the region of the at least one pivot hinge (7) and outside of or in a plane with the pivot axis (8) fold into a multiple fold having a plurality of creased edges (14a, 14b, 14c) when the frame (2) is folded together, and wherein the flat material web (6) in said edge regions (13) extends across the at least one pivot hinge (7) in the form of a curve in the unfolded state of the first frame (2).

2. The wind deflecting device according to claim 1, **characterized in that** a second frame (20) is provided, also divided into two partial frames (29a, 29b) by means of at least one pivot hinge (27) for pivoting about a pivot axis (28) and comprising a flat material web (26) fastened in the second frame (20), wherein the second frame (20) is pivotally connected about a folding axis (41) to the first frame (2), so that the wind deflecting device (1) can be unfolded from a storage position folded at least twice into an intermediate position and then further into a use position, and can be refolded in the reverse sequence, wherein said edge regions (13) of the flat material web (6) fixed in the first frame (2) curvingly extend across the at least one pivot hinge (27) of the two partial frames (29a, 29b) of the second frame (20) in the intermediate position of the wind deflecting device (1), and said edge regions (13) of the flat material web (6) bend away from said at least one pivot hinge (27) when folding together from the intermediate position into the storage position, thereby forming said multiple folds (14a, 14b, 14c).

3. The wind deflecting device according to claim 2, **characterized in that** at least portions of the second frame (20) enter into the first frame (2) and the pivot axes (8, 28) of each partial frame (9a, 9b, 29a, 29b) of the two frames (2, 20) coincide in the storage position.

4. The wind deflecting device according to claim 2 or 3, **characterized in that**, the first frame (2) is implemented as a cover frame (2) for covering the vehicle interior behind the driver's and passenger's seats, and the second frame (20) is implemented as a wind deflector frame (20) for erecting in the vehicle.

5. The wind deflecting device according to any one of the preceding claims, **characterized in that** the multiple folding and the multiple creased edges (14a, 14b, 14c) thereof, preferably running substantially parallel in segments, transition into a single crease (14d) in the direction of the interior of the first frame (2).

6. The wind deflecting device according to any one of the preceding claims, **characterized in that** the length (L) of each multiple folding is at least 8 mm in the axial direction thereof, preferably greater than 12 mm.

7. The wind deflecting device according to any one of the preceding claims, **characterized in that** the width (b) of an edge region forming a multiple folding when the wind deflecting device (1) is unfolded is at least 5 mm, preferably greater than 10 mm.

8. The wind deflecting device according to any one of the preceding claims, **characterized in that** the multiple folding comprises substantially three creased edges (14a, 14b, 14c).

9. The wind deflecting device according to any one of the preceding claims, **characterized in that** the fastening means (45) for the flat material web fixed in the first frame comprises at least one bead (45) placed in a mounting element, preferably a groove (15), of the first frame (2) and fixing the edges of the flat material web (6) there.

10. The wind deflecting device according to any one of the preceding claims, **characterized in that** the fastening means (45) for the flat material web (6) fixed in the first frame (2), preferably in the form of a bead (45), runs nearer to the outer profile edge (12) than to the inner profile edge (11) of the first frame (2), at least in the region of the pivot hinges (7) of the first frame (2).

11. The wind deflecting device according to any one of the preceding claims, **characterized in that** the fastening means (45) for the flat material web (6) fixed in the first frame (2), particularly said bead (45), runs in the first frame (2) at a varying distance from the inner profile edge (11) of the first frame (2) .

12. The wind deflecting device according to any one of the preceding claims, **characterized in that** the fastening means (45) for the flat material web (6) fixed in the first frame (2), particularly said bead, runs predominantly nearer to the outer profile edge (12) than to the inner profile edge (11) of the first frame (2) .

13. The wind deflecting device according to any one of the preceding claims, **characterized in that** the flat material web (6) fixed in the first frame (2) covers frame profiles (3, 4, 5) of the first frame, as seen in plan view, preferably by greater than 70%, preferably by greater than 80%, and particularly preferably by greater than 90% of said frame profile elements (3, 4, 5), and/or that the flat material web (6) is designed to be more opaque in the region of the frame profile covering (18) than in the region of the open area (19) between the frame profiles (3, 4, 5).

14. The wind deflecting device according to any one of the preceding claims, **characterized in that** the creased edges (14a, 14b, 14c) are predefined by conditioning, preferably by means of hot embossing or seams provided in the associated flat material web (6).

15. The wind deflecting device according to any one of the preceding claims, **characterized in that** the fastening means (45) comprise a securing element, for example in the form of an inserted block, fixed, for example screwed or riveted, to the frame (2), locally in the region of the multiple folding having a plurality of creased edges (14a, 14b, 14c), for the flat material web (6), and/or a bead clamping the flat material web (6), at which a creased edge (14a, 14c) of the multiple folding is formed.

## Revendications

1. Dispositif coupe-vent pour une voiture particulière, avec au moins un premier cadre (2), qui comporte au moins deux cadres partiels (9a, 9b), qui sont reliés l'un avec l'autre au moyen d'au moins une charnière pivotante (7) de manière pivotante autour d'un axe de pivotement (8), et avec une bande de matériau plat (6) fixée dans le cadre (2) par au moins un moyen de fixation (45), **caractérisé en ce que** la bande de matériau plat (6) est fixée dans le cadre (2) de manière à ce que des zones de bordure (13) de la bande de matériau plat (6) disposées dans la zone de l'au moins une charnière pivotante (7), qui sont situées hors ou dans un même plan que l'axe de pivotement (8), se plient lors du repliement du cadre (2) en forme d'un pliage multiple avec plusieurs bords de pliage (14a, 14b, 14c), et sachant que la bande de matériau plat (6) dans lesdites zones de bordure (13) s'étend en forme de bombage sur l'au moins une charnière pivotante (7) à l'état déployé du premier cadre (2).

2. Dispositif coupe-vent selon la revendication 1, caractérisé en ce qu'il est prévu un second cadre (20), qui est également subdivisé en deux cadres partiels (29a, 29b) au moyen d'au moins une charnière pivotante (27) pour le pivotement autour d'un axe de pivotement (28) et qui comporte une bande de matériau plat (26) fixée dans le second cadre (20), sachant que le second cadre (20) est relié avec le premier cadre (2) de manière pivotante autour d'un axe de repliement (41), de sorte que le dispositif coupe-vent (1) soit dépliable depuis une position de rangement au moins doublement pliée dans une position intermédiaire puis dans une position d'utilisation et repliable dans l'ordre inverse, sachant en outre que lesdites zones de bordure (13) de la bande de matériau plat (6) tendue dans le premier cadre (2), dans la position intermédiaire du dispositif coupe-vent (1), s'étendent en formant un bombage sur l'au moins une charnière pivotante (27) des deux cadres partiels (29a, 29b) du second cadre (20), et, lors du repliement de la position intermédiaire dans la position de rangement, lesdites zones de bordure (13) de la bande de matériau plat (6) se plient en s'éloignant de cette au moins une charnière pivotante (27) en formant ledit pliage multiple (14a, 14b, 14c).

3. Dispositif coupe-vent selon la revendication 2, **caractérisé en ce que**, dans la position de rangement, au moins des parties du second cadre (20) pénètrent dans le premier cadre (2) et les axes de pivotement (8, 28) des cadres partiels (9a, 9b, 29a, 29b) respectifs des deux cadres (2, 20) coïncident.

4. Dispositif coupe-vent selon la revendication 2 ou 3, **caractérisé en ce que** le premier cadre (2) se présente sous la forme d'un cadre de recouvrement (2) pour recouvrir l'habitacle du véhicule derrière les sièges du conducteur et du passager avant et le second cadre (20) se présente sous la forme d'un cadre coupe-vent (20) à poser dans le véhicule.

5. Dispositif coupe-vent selon l'une des revendications précédentes, **caractérisé en ce que** le pliage multiple avec ses multiples bords de pliage (14a, 14b, 14c), qui s'allongent de préférence de manière essentiellement parallèle en certaines sections, passent à un bord de pliage (14d) unique vers l'espace intérieur du premier cadre (2).

6. Dispositif coupe-vent selon l'une des revendications précédentes, **caractérisé en ce que** la longueur (L) du pliage multiple respectif est au moins de 8 mm, de préférence de plus de 12 mm, dans sa direction axiale.

7. Dispositif coupe-vent selon l'une des revendications précédentes, **caractérisé en ce que** la largeur (b) d'une zone de bordure formant un pliage multiple est d'au moins 5 mm, de préférence de plus 10 mm, dans l'état déployé du dispositif coupe-vent (1).

8. Dispositif coupe-vent selon l'une des revendications précédentes, **caractérisé en ce que** le pliage multiple comporte essentiellement trois bords de pliage (14a, 14b, 14c).

9. Dispositif coupe-vent selon l'une des revendications précédentes, **caractérisé en ce que** le moyen de fixation (45) pour la bande de matériau plat tendue dans le premier cadre comprend au moins un bourrelet (45), qui est inséré dans une fixation, de préférence une rainure (15), du premier cadre (2) et y tend la bande de matériau plat (6) en zone de bordure.

10. Dispositif coupe-vent selon l'une des revendications précédentes, **caractérisé en ce que** le moyen de fixation (45) pour la bande de matériau plat (6) tendue dans le premier cadre (2) s'étend, de préférence sous la forme d'un bourrelet (45), plus près de l'arête extérieure (12) du profilé que de l'arête intérieure (11) du profilé du premier cadre (2) au moins dans la zone des charnières pivotantes (7) du premier cadre (2).

11. Dispositif coupe-vent selon l'une des revendications précédentes, **caractérisé en ce que** le moyen de fixation (45) pour la bande de matériau plat (6) tendue dans le premier cadre (2), en particulier ledit bourrelet (45), s'étend dans le premier cadre (2) à une distance variante depuis l'arête intérieure (11) du profilé du premier cadre (2).

12. Dispositif coupe-vent selon l'une des revendications précédentes, **caractérisé en ce que** le moyen de fixation (45) pour la bande de matériau plat (6) tendue dans le premier cadre (2), en particulier ledit bourrelet, s'étend en majeure partie plus près de l'arête extérieure (12) du profilé que de l'arête intérieure (11) du profilé du premier cadre (2).

13. Dispositif coupe-vent selon l'une des revendications précédentes, **caractérisé en ce que** la bande de matériau plat (6) tendue dans le premier cadre (2) recouvre des profilés de cadre (3, 4, 5) du premier cadre en vue de dessus, de préférence à plus de 70%, de manière plus préférée à plus de 80% et de manière particulièrement préférée à plus de 90%, de ces éléments de profilés (3, 4, 5) de cadre et/ou que la bande de matériau plat (6) se présente sous une forme plus opaque dans la zone du recouvrement (18) des profilés de cadre que dans la zone de la surface (19) libre entre les profilés de cadre (3, 4, 5).

14. Dispositif coupe-vent selon l'une des revendications précédentes, **caractérisé en ce que** les bords de pliage (14a, 14b, 14c) sont prédéfinis par un conditionnement, de préférence par estampage à chaud ou par des coutures prévues dans la bande de matériau plat (6) concernée.

15. Dispositif coupe-vent selon l'une des revendications précédentes, **caractérisé en ce que** les moyens de fixation (45) comportent un élément de sûreté fixé localement, par exemple vissé ou riveté au cadre (2) dans la zone du pliage multiple avec ses multiples bords de pliage (14a, 14b, 14c), par exemple sous la forme d'une pierre sertie, pour la bande de matériau plat (6) et/ou un bourrelet serrant la bande de matériau plat (6), auquel se forme un bord de pliage (14a, 14c) du pliage multiple.
